# EUROPÄISCHE PATENTSCHRIFT

(11) **EP 2 266 868 B1**
(45) Veröffentlichungstag und Bekanntmachung des Hinweises auf die Patenterteilung: **08.08.2018**
(21) Anmeldenummer: 10006425.2
(22) Anmeldetag: 21.06.2010
(51) Int. Cl.: B62H 5/00

(54) **Bügelschloss**
Frame lock
Cadenas en U

(30) Priorität: 23.06.2009 DE 102009030034
(43) Veröffentlichungstag der Anmeldung: 29.12.2010
(73) Patentinhaber: ABUS August Bremicker Söhne KG, 58300 Wetter-Volmarstein (DE)
(72) Erfinder:
(74) Vertreter: Manitz Finsterwald Patentanwälte PartmbB

(56) Entgegenhaltungen:
- EP-A1- 0 588 265
- EP-B1- 1 558 485
- US-A1- 2005 241 348
- US-A1- 2006 150 691

## Beschreibung

Die Erfindung betrifft ein Bügelschloss für Zweiräder, wobei das Bügelschloss einen Schlosskörper und einen im Wesentlichen U-förmigen Bügel aufweist. Der Bügel ist wahlweise von dem Schlosskörper lösbar oder an dem Schlosskörper verriegelbar.

Ein derartiges Bügelschloss dient zum Sichern eines Zweirads, insbesondere eines Fahrrads oder eines Motorrads. Hierfür ist der Schlosskörper üblicherweise mit einer Verriegelungseinrichtung versehen. In einer Entriegelungsstellung der Verriegelungseinrichtung kann der Bügel von dem Schlosskörper gelöst werden, um einen Teil des Zweirads (beispielsweise einen Rahmenabschnitt) und ein feststehendes Objekt (beispielsweise einen Laternenpfosten oder einen Fahrradständer) zu umgreifen. Alternativ hierzu nimmt der Bügel lediglich einen Teil des Zweirads auf (beispielsweise wird der Bügel durch die Speichen eines Rads geführt). Anschließend wird der Bügel mit dem Schlosskörper in Eingriff gebracht, und die Verriegelungseinrichtung des Schlosskörpers wird beispielsweise mittels eines zugeordneten Schlüssels in die Verriegelungsstellung gebracht. Hierdurch ist der Bügel an dem Schlosskörper festgelegt und das Zweirad ist gegen eine unbefugte Benutzung oder Entnahme gesichert.

Derartige Zweiradschlösser sollen naturgemäß möglichst aufbruchsicher sein. Zu diesem Zweck ist es bekannt, den Bügel als einen gebogenen Stab aus massivem Metall auszubilden. Eine derartige massive Bauweise ist mit einem entsprechend hohen Gewicht verbunden.

Aus der EP 1 558 485 B1 ist ein U-Bügelschloss bekannt, bei dem der Bügel keramische Verstärkungselemente aufweist, die sich innerhalb einer Metallummantelung entlang der U-Form des Bügels nebeneinander und hintereinander erstrecken. Ein derartiges Bügelschloss zeichnet sich zwar durch eine hohe Aufbruchsicherheit aus, und die Verwendung von keramischen Verstärkungselementen trägt zu einer vorteilhaften Gewichtsreduktion bei. Die Herstellung eines derartigen Bügelschlosses ist jedoch unerwünscht aufwendig, und das Schloss ist dementsprechend teuer.

Aus der US 2006/0150691 A1 ist es bekannt, zwei Bügelschlösser derart ineinander anzuordnen und miteinander zu verbinden, dass ihre U-förmigen Bügel sich nebeneinander erstrecken.

Aus der EP 0 588 265 A1 ist ein Bügelschloss mit einem U-förmigen Bügel und einem den Bügel umhüllenden Schutzschlauch bekannt.

Es ist eine Aufgabe der Erfindung, ein Bügelschloss mit einem Schlosskörper und einem hieran verriegelbaren U-förmigen Bügel zu schaffen, das bei hoher Aufbruchsicherheit kostengünstig herstellbar ist und ein geringes Gewicht besitzt.

Diese Aufgabe wird durch ein Bügelschloss mit den Merkmalen des Anspruchs 1 gelöst, und insbesondere dadurch, dass der Bügel mindestens zwei Drahtabschnitte aufweist, die sich entlang der U-Form des Bügels nebeneinander erstrecken und die zumindest bereichsweise von einer Umhüllung umgeben sind.

Bei dem erfindungsgemäßen Bügelschloss weist der Bügel mehrere Drahtabschnitte auf, die entlang der Erstreckungsrichtung des Bügels, also zwischen den beiden Bügelenden, nebeneinander verlaufen. Der Bügel besteht also nicht aus einem einzigen massiven gebogenen Metallstab. Im Unterschied zu so genannten Seilschlössern oder Kabelschlössern ist der Bügel auch nicht durch ein flexibles, geflochtenes Drahtseil gebildet. Stattdessen umfasst der Bügel mehrere, beispielsweise zwei, drei oder vier Drahtabschnitte, die entsprechend der U-Form des Bügels gebogen sind. Die Drahtabschnitte bilden gemeinsam mit einer Umhüllung eine im Wesentlichen starre Anordnung. Vorzugsweise besteht der Bügel ausschließlich aus den Drahtabschnitten, der Umhüllung und optional den nachstehend noch genannten Abstandshaltern und/oder Befestigungsteil, wobei die Umhüllung insbesondere aus Kunststoff gebildet ist.

Unter einem Draht ist generell ein durch Ziehen hergestelltes Metallstück zu verstehen. Die Drahtabschnitte sind im Wesentlichen starr. Mit anderen Worten sind die Drahtabschnitte auch ohne die genannte Umhüllung formstabil, d.h. der Draht kann (durch hohen Kraftaufwand) zwar entsprechend der U-Form des Bügels gebogen werden, er behält die gebogene Form jedoch bei (inelastische Verformung). Der Draht kann einen runden Querschnitt besitzen (Runddraht), oder der Querschnitt ist mehreckig, beispielsweise viereckig oder sechseckig (z.B. durch Kaltumformen eines Runddrahts hergestellt). Bei dem erfindungsgemäßen Bügelschloss ist der Querschnittsdurchmesser des verwendeten Drahts geringer als der Querschnittsdurchmesser des durch die Drahtabschnitte und die Umhüllung gebildeten Bügels.

Der Erfindung liegt die Erkenntnis zugrunde, dass bereits durch die Verwendung mehrerer nebeneinander angeordneter Drahtabschnitte ein U-förmiger Bügel mit einer hinreichend hohen Aufbruchsicherheit gebildet werden kann, insbesondere wenn es sich bei den verwendeten Drahtabschnitten um gehärtete Metalldrähte handelt. Auch ein einzelner Drahtabschnitt kann nämlich bereits eine hohe Kneif- und Sägefestigkeit besitzen, so dass eine Anordnung von mehreren zueinander benachbarten Drahtabschnitten einen wirksamen Schutz gegen ein unbefugtes Öffnen des Schlossbügels liefert. Durch die zusätzliche Verwendung einer Umhüllung kann ein Gebilde geschaffen werden, das im Vergleich zu bekannten U-Bügeln ein verringertes Gewicht besitzt und dem Benutzer eine komfortable Handhabung ermöglicht. Ferner kann ein derartiger Bügel kostengünstig hergestellt werden.

Vorteilhafte Ausführungsformen der Erfindung sind nachfolgend und in den abhängigen Ansprüchen genannt.

Gemäß einer Ausführungsform erstrecken die Drahtabschnitte sich entlang der U-Form des Bügels im Wesentlichen parallel zueinander. Hierdurch kann der Bügel entlang seiner U-Form einen gleichförmigen Querschnitt besitzen, und auch die Herstellung des Bügels (Biegen der Drahtabschnitte; Anbringen der Umhüllung; optional Vorsehen von Abstandshaltern) erweist sich als besonders einfach.

Gemäß einer weiteren Ausführungsform sind die Drahtabschnitte entlang der U-Form des Bügels beabstandet voneinander angeordnet. Hierdurch ergibt sich eine verbesserte Aufbruchsicherheit, da ein Aufbruchwerkzeug nacheinander an verschiedenen Stellen des Bügels angesetzt werden muss.

Insbesondere können zwischen den Drahtabschnitten des Bügels Abstandshalter vorgesehen sein, um die Anordnung der Drahtabschnitte relativ zueinander zu stabilisieren, oder um die Herstellung des Bügels zu vereinfachen. Die Abstandshalter können als separate Bauelemente vorgesehen sein, oder die Abstandshalter sind integral mit dem Draht oder integral mit der Umhüllung gebildet.

Gemäß einer weiteren Ausführungsform erstrecken die zwei genannten Drahtabschnitte sich innerhalb einer Ebene. Mit anderen Worten sind in diesem Fall die Drahtabschnitte derart gebogen, dass sie innerhalb einer einzigen Ebene verlaufen. Hierdurch ergibt sich eine besonders kostengünstige Herstellung, da die verwendeten Biegewerkzeuge entsprechend einfach ausgebildet sein können.

Gemäß einer weiteren Ausführungsform bildet wenigstens einer der Drahtabschnitte an wenigstens einem Bügelende eine Einschnürung zur Aufnahme eines Riegelelements der bereits erläuterten Verriegelungseinrichtung des Schlosskörpers. Hierdurch kann der betreffende Drahtabschnitt also (entweder frei liegend oder gemeinsam mit der Umhüllung) eine Vertiefung des Bügels bilden, damit der Bügel zuverlässig an dem Schlosskörper festgelegt werden kann, wenn der Bügel mit dem Schlosskörper in Eingriff gebracht ist und die Verriegelungseinrichtung in die Verriegelungsstellung gebracht wird.

Alternativ oder zusätzlich zu dem Vorsehen einer derartigen Einschnürung können die Drahtabschnitte an wenigstens einem der beiden Bügelenden mit einem Befestigungsteil verbunden sein, das zur Aufnahme eines Riegelelements einer Verriegelungseinrichtung des Schlosskörpers dient, beispielsweise durch Ausbildung einer geeigneten Eingriffsvertiefung. In diesem Fall ist also ein von der genannten Umhüllung (z.B. Kunststoff) separates Befestigungsteil (z.B. Metall) vorgesehen, um hinsichtlich des Festlegens des Bügels an dem Schlosskörper einen besonders stabilen Sitz zu erreichen. Die Drahtabschnitte können beispielsweise mit dem Befestigungsteil verschweißt, in dem Befestigungsteil vergossen oder durch Ausbildung gebogener Verankerungsstellen in dem Befestigungsteil formschlüssig gehalten sein.

Gemäß einer weiteren Ausführungsform bilden die zwei genannten Drahtabschnitte eine geschlossene Drahtschlaufe. Mit anderen Worten sind die zwei Drahtabschnitte an den beiden Bügelenden über einen jeweiligen Schlaufenabschnitt miteinander verbunden. Der Schlaufenabschnitt kann insbesondere frei liegen, oder von der genannten Umhüllung umgeben sein, oder von dem genannten Befestigungsteil umgeben sein. Hierdurch zeichnet sich der Bügel durch eine verbesserte Aufbruchsicherheit aus, insbesondere falls versucht wird, ein Aufbruchwerkzeug (z.B. Meißel) in den Zwischenraum zwischen die beiden Drahtabschnitte einzutreiben, um auf diese Weise den Bügel zu sprengen. Bei dieser Ausführungsform können die Drahtenden beispielsweise miteinander stumpf verschweißt oder überlappend verschweißt sein. Die jeweilige Schweißnaht muss nicht unbedingt an dem genannten Schlaufenabschnitt der geschlossenen Drahtschlaufe (also an einem Bügelende) vorgesehen sein, sondern kann an beliebiger Stelle angeordnet sein.

Gemäß einer weiteren Ausführungsform können vier Drahtabschnitte vorgesehen sein, die sich nebeneinander und insbesondere beabstandet voneinander entlang der U-Form des Bügels erstrecken. Hierdurch kann gemeinsam mit der Umhüllung eine Querschnittsform des Bügels gebildet werden, die deutlich größer ist als der Querschnittsdurchmesser eines einzelnen Drahtabschnitts. Außerdem erhöht eine derartige Anzahl von Drahtabschnitten die Aufbruchsicherheit des Bügelschlosses. Dennoch kann gegenüber Bügelschlössern mit einem massiven Metallstab als Bügel eine deutliche Gewichtsreduzierung erreicht werden, insbesondere wenn für die Umhüllung ein Material mit einer geringen Dichte verwendet wird und/oder wenn zwischen den Drahtabschnitten und der Umhüllung ein Hohlraum gebildet ist.

Insbesondere kann der Bügel zwei geschlossene Drahtschlaufen aufweisen, die sich entlang der U-Form des Bügels nebeneinander erstrecken, um im Querschnitt vier nebeneinander verlaufende Drahtabschnitte zu bilden. Vorzugsweise sind zwischen den zwei geschlossenen Drahtschlaufen Abstandshalter vorgesehen.

Was die genannte Umhüllung der Drahtabschnitte betrifft, so kann diese einen Kunststoffguss oder einen Metallguss aufweisen. Hierdurch kann der Bügel auf einfache Weise hergestellt werden, indem die Drahtabschnitte zunächst zu der erwünschten Form des U-förmigen Bügels gebogen werden und sodann durch ein Spritzgießverfahren mit der genannten Umhüllung versehen werden.

Alternativ hierzu kann die Umhüllung ein Gehäuse aus Kunststoff oder aus Metall aufweisen. Insbesondere kann die Umhüllung durch ein mehrteiliges Gehäuse gebildet sein, beispielsweise bestehend aus zwei miteinander verbundenen Schalen. Das Verbinden der Gehäuseteile kann beispielsweise durch Verrasten, Verschrauben, Verpressen oder Verschweißen erfolgen.

Ferner ist es bevorzugt, wenn zwischen den Drahtabschnitten und der Umhüllung des U-förmigen Bügels wenigstens ein Hohlraum gebildet ist. Hierdurch kann eine besonders deutliche Gewichtsreduzierung erreicht werden, wobei der Bügel dennoch einen großen Querschnittsdurchmesser besitzen kann, um einen komfortable Handhabung zu ermöglichen. Eine einteilige Umhüllung aus Kunststoff mit Hohlraum kann beispielsweise durch ein Gasinnendruck-Spritzgießverfahren hergestellt werden.

Die Erfindung wird nachfolgend lediglich beispielhaft unter Bezugnahme auf die Zeichnungen erläutert.
- Fig. 1: zeigt eine schematische Ansicht eines U-Bügelschlosses.
- Fig. 2: zeigt eine Explosionsansicht eines U-förmigen Bügels gemäß einer ersten Ausführungsform.
- Fig. 3a, 3b und 3c: zeigen eine Vorderansicht, eine Querschnittsansicht bzw. eine Seitenansicht des Bügels gemäß Fig. 2.
- Fig. 4: zeigt eine vergrößerte Darstellung des Bereichs IV gemäß Fig. 3b.
- Fig. 5: zeigt eine Explosionsansicht eines U-förmigen Bügels gemäß einer zweiten Ausführungsform.
- Fig. 6a und 6b: zeigen eine Vorderansicht bzw. eine Querschnittsansicht des Bügels gemäß Fig. 5.
- Fig. 7: zeigt eine vergrößerte Darstellung des Bereichs VII gemäß Fig. 6b.
- Fig. 8: zeigt eine Explosionsansicht eines U-förmigen Bügels gemäß einer dritten Ausführungsform.
- Fig. 9a und 9b: zeigen eine Vorderansicht bzw. eine Seitenansicht des Bügels gemäß Fig. 8.

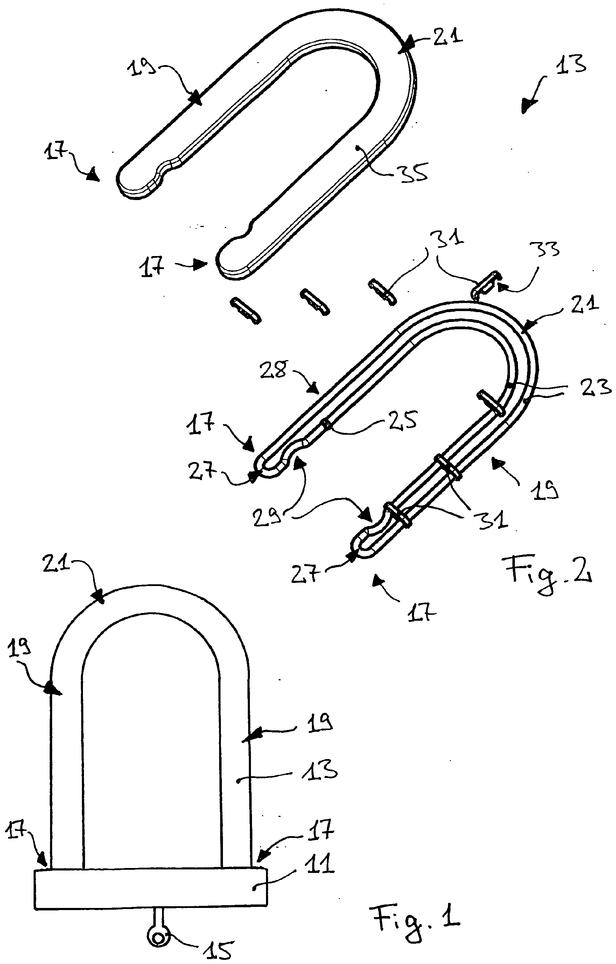

Fig. 1 zeigt ein Bügelschloss für Zweiräder, mit einem Schlosskörper 11 und einem im Wesentlichen starren, U-förmigen Bügel 13, der wahlweise von dem Schlosskörper 11 lösbar oder an dem Schlosskörper 11 verriegelbar ist. Hierfür beherbergt der Schlosskörper 11 eine nicht näher dargestellte Verriegelungseinrichtung, die mittels eines Schlüssels 15 betätigt werden kann. Bei dem Bügelschloss gemäß Fig. 1 sind die beiden Enden 17 des Bügels 13 in geeignete Öffnungen des Schlosskörpers 11 eingeführt. Der Bügel 13 besitzt zwei voneinander beabstandete, parallel zueinander ausgerichtete Schenkel 19. An der dem Schlosskörper 11 und den Bügelenden 17 abgewandten Seite sind die Schenkel 19 über einen U-förmig gekrümmten Verbindungsabschnitt 21 miteinander verbunden.

Fig. 2 bis 4 zeigen eine erste Ausführungsform eines Bügels 13 gemäß Fig. 1. Der Bügel 13 besitzt zwei U-förmig gebogene Drahtabschnitte 23, die sich entlang des Bügels 13, also entlang des einen Schenkels 19, des Verbindungsabschnitts 21 und des anderen Schenkels 19, nebeneinander erstrecken. Hierbei verlaufen die Drahtabschnitte 23 beabstandet voneinander und parallel zueinander. Die beiden Drahtabschnitte 23 sind durch ein einziges Drahtstück, beispielsweise aus Federstahl, gebildet, wobei die beiden Enden dieses Drahtstücks miteinander stumpf verschweißt sind (Schweißnaht 25). An den beiden Bügelenden 17 gehen die beiden Drahtabschnitte 23 über einen jeweiligen Schlaufenabschnitt 27 ineinander über, so dass die beiden Drahtabschnitte 23 insgesamt eine geschlossene Drahtschlaufe 28 bilden, die sich innerhalb einer einzigen Ebene erstreckt und somit einen flachen Aufbau besitzt.

Die beiden Drahtenden müssen nicht unbedingt miteinander verschweißt sein. Stattdessen können die beiden Drahtenden auch lediglich benachbart zueinander angeordnet sein, also mit einem Zwischenraum, um eine im Wesentlichen geschlossene Drahtschlaufe 28 zu bilden. Die beiden Drahtenden können auch überlappend angeordnet sein (mit oder ohne Schweißverbindung).

An den Bügelenden 17 besitzt der innere Drahtabschnitt 23 eine jeweilige Einschnürung 29. Die Einschnürungen 29 dienen dazu, ein Riegelelement einer Verriegelungseinrichtung aufzunehmen, wenn der Bügel 13 in einen Schlosskörper 11 eingeführt ist und hieran verriegelt wird (Fig. 1).

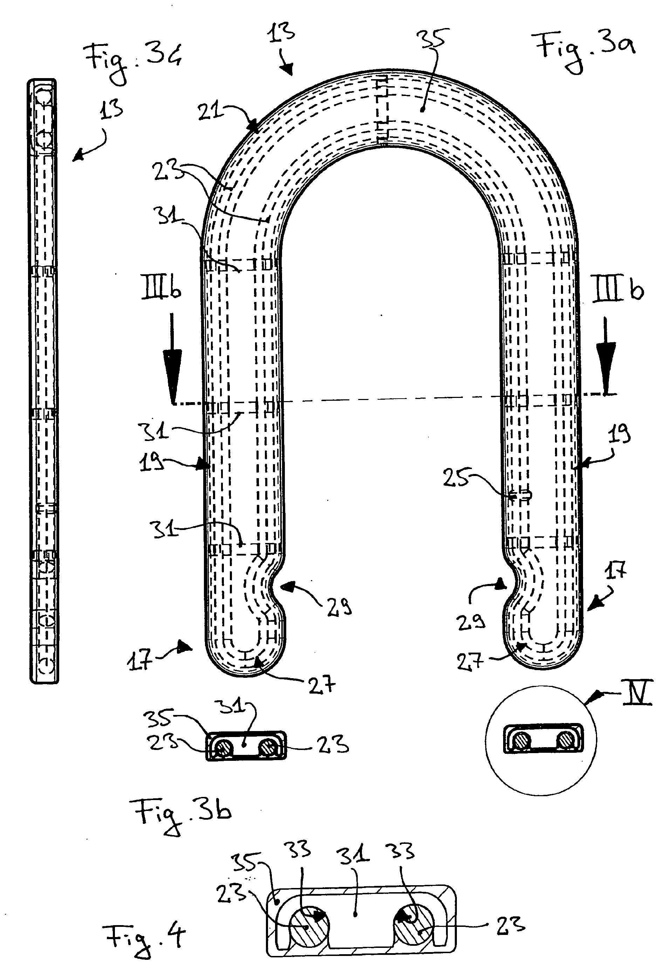

Mehrere Abstandshalter 31, beispielsweise aus Kunststoff oder aus Metall, dienen dazu, die beiden Drahtabschnitte 23 relativ zueinander zu fixieren und zu stabilisieren. Die Abstandshalter 31 können beispielsweise plättchenförmig sein und Ausnehmungen 33 besitzen, in welche die Drahtabschnitte 23 unter Ausbildung eines Klemmsitzes oder eines Rastschlosses eingesetzt werden (Fig. 4).

Der Bügel 13 gemäß Fig. 2 bis 4 besitzt ferner eine Umhüllung 35, welche durch einen Kunststoffguss gebildet ist und welche die beiden Drahtabschnitte 23 und die Abstandshalter 31 vollständig umschließt. Der Bügel 13 besitzt somit einen im Wesentlichen rechteckigen Querschnitt (Fig. 4).

Der Bügel 13 gemäß Fig. 2 bis 4 besitzt ein vorteilhaft geringes Gewicht, da der Bügel 13 nicht als ein einziger massiver Metallstab ausgebildet ist, sondern die zwei Drahtabschnitte 23 aufweist, die von der vergleichsweise leichten Kunststoff-Umhüllung 35 umgeben sind. Dennoch besitzt der Bügel 13 eine hohe Aufbruchsicherheit, da auch Drahtabschnitte 23 eine hohe Kneif- und Sägefestigkeit besitzen. Die Aufbruchsicherheit wird bei dem gezeigten Ausführungsbeispiel auch noch dadurch erhöht, dass die beiden Drahtabschnitte 23 beabstandet voneinander verlaufen und in einem massiven Kunststoffgehäuse (Umhüllung 35) vergossen sind. Ein Aufbruchwerkzeug kann also nicht ohne weiteres an den beiden Drahtabschnitte 23 angreifen, sondern muss auch erst noch den Zwischenraum überwinden. Durch das Vorsehen einer Umhüllung 35 wird außerdem die Handhabung des Bügels 13 beim Lösen von dem Schlosskörper 11 und Einführen in den Schlosskörper 11 (Fig. 1) erleichtert.

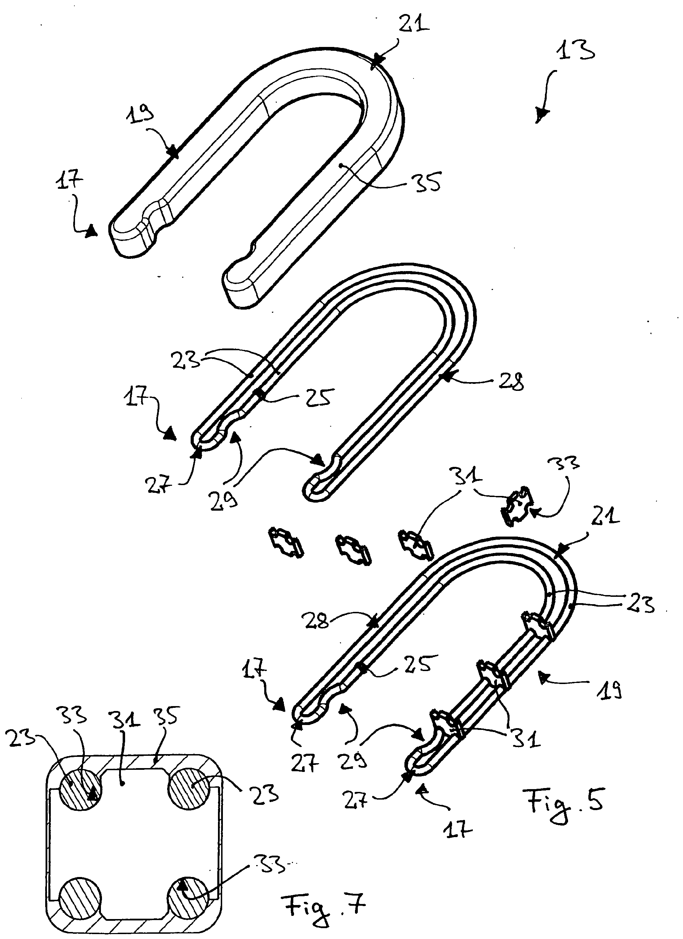

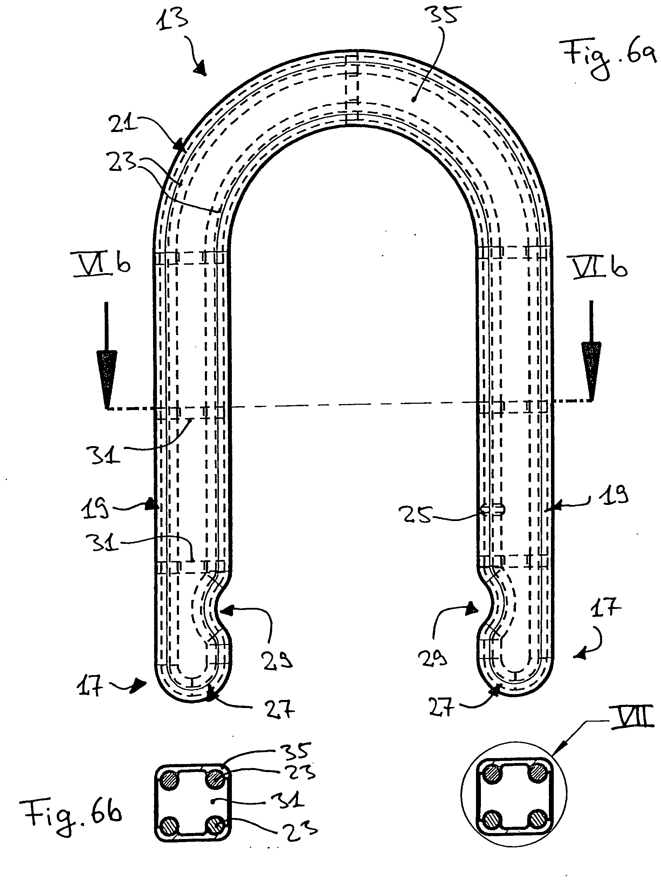

Fig. 5 bis 7 zeigen eine zweite Ausführungsform eines Bügels 13, wobei gleichartige Elemente wie bei der ersten Ausführungsform gemäß Fig. 2 bis 4 mit denselben Bezugszeichen gekennzeichnet sind.

Der wesentliche Unterschied zu der ersten Ausführungsform besteht darin, dass der Bügel 13 gemäß Fig. 5 bis 7 vier Drahtabschnitte 23 besitzt, die U-förmig gebogen sind und sich somit entlang des Bügels 13 nebeneinander erstrecken. Diese vier Drahtabschnitte 23 bilden paarweise zwei geschlossene Drahtschlaufen 28, die parallel versetzt zueinander angeordnet sind, d.h. die beiden Drahtschlaufen 28 bilden zwei planparallele Erstreckungsebenen und ergeben einen im Wesentlichen quadratischen Querschnitt des Bügels 13 (Fig. 7). Auch bei dieser Ausführungsform sind Abstandshalter 31 vorgesehen, welche die Drahtabschnitte 23 relativ zueinander fixieren und stabilisieren. Ferner sind die Drahtabschnitte 23 auch bei dieser Ausführungsform von einer Umhüllung 35 umgeben, die insbesondere durch einen Kunststoffguss gebildet ist.

Auch der Bügel 13 gemäß Fig. 5 bis 7 besitzt ein vorteilhaft geringes Gewicht, insbesondere im Vergleich zu einem Bügel, der als ein massiver gebogener Metallstab mit denselben Querschnittsabmessungen ausgebildet ist. Durch die Verwendung von vier Drahtabschnitten 23, die beabstandet zueinander nebeneinander verlaufen, ist die Aufbruchsicherheit gegenüber der ersten Ausführungsform gemäß Fig. 2 bis 4 erhöht.

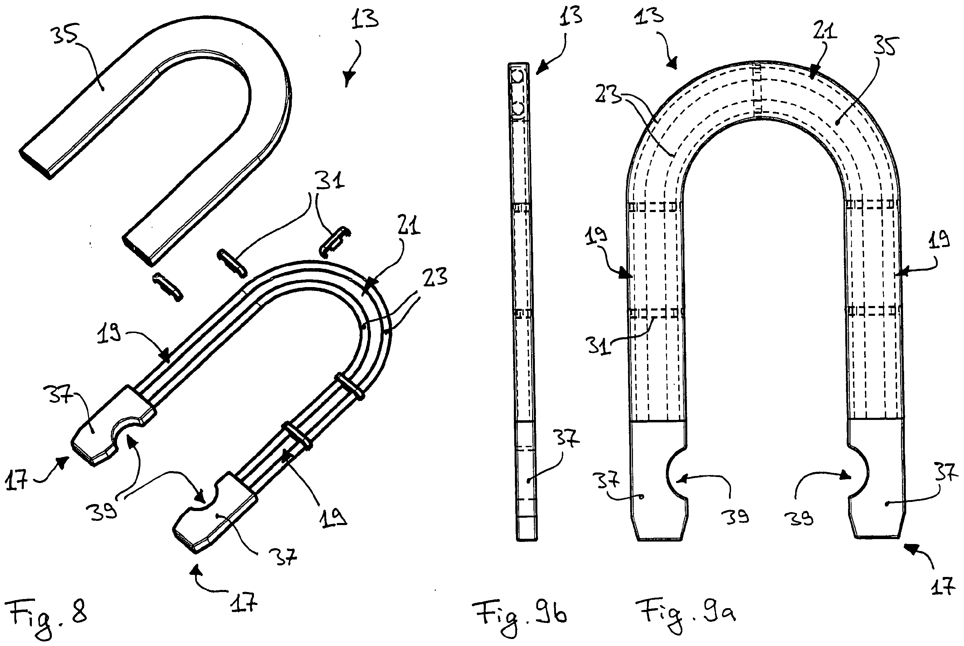

Fig. 8, 9a und 9b zeigen eine dritte Ausführungsform eines Bügels 13, wobei gleichartige Elemente wie bei der ersten und der zweiten Ausführungsform gemäß Fig. 2 bis 7 wiederum mit denselben Bezugszeichen gekennzeichnet sind.

Auch bei dieser Ausführungsform weist der Bügel 13 zwei Drahtabschnitte 23 auf, die sich entlang der U-Form des Bügels 13 nebeneinander erstrecken und die entlang der Bügelschenkel 19 und des Verbindungsabschnitts 21 von einer Umhüllung 35 (vorzugsweise Kunststoffguss) umgeben sind. An den Bügelenden 17 jedoch ist ein jeweiliges Befestigungsteil 37 vorgesehen (z.B. Metallguss), das von den Drahtabschnitten 23 und der Umhüllung 35 separat ausgebildet ist. Die Befestigungsteile 37 sind mit den Drahtabschnitten 23 fest verbunden. Beispielsweise können die Drahtabschnitte 23 in den Befestigungsteilen 37 vergossen sein. Die Befestigungsteile 37 erleichtern ein passgenaues Einführen der Bügelenden 17 in die zugeordneten Öffnungen des Schlosskörpers 11 (Fig. 1) und dienen vor allem zum sicheren Festlegen des Bügels 13 am Schlosskörper 11. Hierfür besitzen die Befestigungsteile 37 eine jeweilige Eingriffsvertiefung 39 zur Aufnahme eines Riegelelements einer Verriegelungseinrichtung des Schlosskörpers 11.

Aufgrund der Ausbildung des Bügels 13 mit zwei gebogenen Drahtabschnitten 23 und einer leichten Umhüllung 35 besitzt der Bügel 13 ein geringes Gewicht. Die Befestigungsteile 37 gewährleisten gleichwohl ein sicheres Verriegeln am Schlosskörper 11. Selbstverständlich können auch bei dieser Ausführungsform (wie bei der zweiten Ausführungsform gemäß Fig. 5 bis 7) vier Drahtabschnitte 23 vorgesehen sein, um zwei planparallele Erstreckungsebenen der Drahtabschnitte 23 und einen im Wesentlichen quadratischen Querschnitt des Bügels 13 zu bilden.

### Bezugszeichenliste

- 11: Schlosskörper
- 13: Bügel
- 15: Schlüssel
- 17: Bügelende
- 19: Bügelschenkel
- 21: Verbindungsabschnitt
- 23: Drahtabschnitt
- 25: Schweißnaht
- 27: Schlaufenabschnitt
- 28: Drahtschlaufe
- 29: Einschnürung
- 31: Abstandshalter
- 33: Ausnehmung
- 35: Umhüllung
- 37: Befestigungsteil
- 39: Eingriffsvertiefung

## Patentansprüche

1. Bügelschloss für Zweiräder, mit einem Schlosskörper (11) und einem im Wesentlichen U-förmigen Bügel (13), der wahlweise von dem Schlosskörper lösbar oder an dem Schlosskörper verriegelbar ist, **dadurch gekennzeichnet,**
**dass** der Bügel (13) wenigstens zwei Drahtabschnitte (23) aufweist, die sich entlang der U-Form des Bügels nebeneinander erstrecken und die zumindest bereichsweise von einer Umhüllung (35) umgeben sind.

2. Bügelschloss nach Anspruch 1, wobei die Drahtabschnitte (23) entsprechend der U-Form des Bügels (13) gebogen sind.

3. Bügelschloss nach Anspruch 1 oder 2, wobei die Drahtabschnitte (23) sich entlang der U-Form des Bügels (13) im Wesentlichen parallel zueinander erstrecken.

4. Bügelschloss nach einem der vorhergehenden Ansprüche, wobei die Drahtabschnitte (23) entlang der U-Form des Bügels (13) beabstandet voneinander angeordnet sind,
und/oder
wobei zwischen den zwei Drahtabschnitten (23) Abstandshalter (31) vorgesehen sind.

5. Bügelschloss nach einem der vorhergehenden Ansprüche, wobei die zwei Drahtabschnitte (23) sich innerhalb einer Ebene erstrecken.

6. Bügelschloss nach einem der vorhergehenden Ansprüche, wobei wenigstens einer der Drahtabschnitte (23) an wenigstens einem Bügelende (17) eine Einschnürung (29) zur Aufnahme eines Riegelelements einer Verriegelungseinrichtung des Schlosskörpers (11) bildet.

7. Bügelschloss nach einem der vorhergehenden Ansprüche, wobei die Drahtabschnitte (23) an wenigstens einem Bügelende (17) mit einem Befestigungsteil (37) zur Aufnahme eines Riegelelements einer Verriegelungseinrichtung des Schlosskörpers (11) verbunden sind.

8. Bügelschloss nach einem der vorhergehenden Ansprüche, wobei die zwei Drahtabschnitte (23) eine im Wesentlichen geschlossene Drahtschlaufe (28) bilden.

9. Bügelschloss nach einem der vorhergehenden Ansprüche, wobei der Bügel (13) zwei im Wesentlichen geschlossene Drahtschlaufen (28) aufweist, die sich entlang der U-Form des Bügels nebeneinander erstrecken.

10. Bügelschloss nach Anspruch 9, wobei die zwei Drahtschlaufen (28) parallel zueinander und beabstandet voneinander angeordnet sind.

11. Bügelschloss nach einem der vorhergehenden Ansprüche, wobei die Drahtabschnitte (23) gehärtet und/oder aus Federstahl gebildet sind,
und/oder
wobei die Drahtabschnitte (23) eine höhere Kneif- und Sägefestigkeit besitzen als die Umhüllung (35).

12. Bügelschloss nach einem der vorhergehenden Ansprüche, wobei die Drahtabschnitte (23) im Wesentlichen starr sind,
und/oder
wobei der Bügel (13) im Wesentlichen starr ausgebildet ist.

13. Bügelschloss nach einem der vorhergehenden Ansprüche, wobei die Umhüllung (35) einen Kunststoffguss oder einen Metallguss aufweist.

14. Bügelschloss nach einem der Ansprüche 1 bis 12, wobei die Umhüllung (35) ein Gehäuse aus Kunststoff oder aus Metall aufweist.

15. Bügelschloss nach einem der vorhergehenden Ansprüche, wobei zwischen den Drahtabschnitten (23) und der Umhüllung (35) wenigstens ein Hohlraum gebildet ist.

## Claims

1. A hoop lock for two wheelers having a lock body (11) and a substantially U-shaped hoop (13) which is selectively releasable from the lock body or latchable to the lock body,
**characterized in that**
the hoop (13) has at least two wire sections (23) which extend along the U shape of the hoop alongside one another and which are surrounded, at least regionally, by a sleeve (35).

2. A hoop lock in accordance with claim 1, wherein the wire sections (23) are bent in accordance with the U shape of the hoop (13).

3. A hoop lock in accordance with claim 1 or claim 2, wherein the wire sections (23) extend substantially in parallel with one another along the U shape of the hoop (13).

4. A hoop lock in accordance with any one of the preceding claims, wherein the wire sections (23) are arranged spaced apart from one another along the U shape of the hoop (13);
and/or
wherein spacers (31) are provided between the two wire sections (23).

5. A hoop lock in accordance with any one of the preceding claims, wherein the two wire sections (23) extend within one plane.

6. A hoop lock in accordance with any one of the preceding claims, wherein at least one of the wire sections (23) forms a constriction (29) at at least one hoop end (17) for the reception of a latch element of a latching device of the lock body (11).

7. A hoop lock in accordance with any one of the preceding claims, wherein the wire sections (23) are connected at at least one hoop end (17) to a fastening part (37) for the reception of a latch element of a latching device of the lock body (11).

8. A hoop lock in accordance with any one of the preceding claims, wherein the two wire sections (23) form a substantially closed wire loop (28).

9. A hoop lock in accordance with any one of the preceding claims, wherein the hoop (13) has two substantially closed wire loops (28) which extend alongside one another along the U shape of the hoop.

10. A hoop lock in accordance with claim 9, wherein the two wire loops (28) are arranged in parallel with one another and spaced apart from one another.

11. A hoop lock in accordance with any one of the preceding claims, wherein the wire sections (23) are hardened and/or made of spring steel;
and/or
wherein the wire sections (23) have a higher resistance to clipping and sawing than the sleeve (35).

12. A hoop lock in accordance with any one of the preceding claims, wherein the wire sections (23) are substantially rigid;
and/or
wherein the hoop (13) is made substantially rigid.

13. A hoop lock in accordance with any one of the preceding claims, wherein the sleeve (35) has a plastic molding or a metal molding.

14. A hoop lock in accordance with any one of the claims 1 to 12, wherein the sleeve (35) has a housing of plastic or metal.

15. A hoop lock in accordance with any one of the preceding claims, wherein at least one hollow cavity is formed between the wire sections (23) and the sleeve (35).

## Revendications

1. Cadenas en U pour deux-roues, comportant un corps (11) et un étrier (13) sensiblement en forme de U qui peut sélectivement être détaché du corps ou être verrouillé sur le corps,
**caractérisé en ce que**
l'étrier (13) comprend au moins deux tronçons de fil (23) qui s'étendent l'un à côté de l'autre le long de la forme en U de l'étrier et qui sont entourés au moins localement par une enveloppe (35).

2. Cadenas en U selon la revendication 1,
**caractérisé en ce que**
les tronçons de fil (23) sont coudés selon la forme en U de l'étrier (13).

3. Cadenas en U selon la revendication 1 ou 2,
dans lequel
les tronçons de fil (23) s'étendent sensiblement parallèlement l'un à l'autre le long de la forme en U de l'étrier (13).

4. Cadenas en U selon l'une des revendications précédentes,
dans lequel
les tronçons de fil (23) sont agencés à distance l'un de l'autre le long de la forme en U de l'étrier (13),
et/ou
des éléments écarteurs (31) sont prévus entre les deux tronçons de fil (23).

5. Cadenas en U selon l'une des revendications précédentes,
dans lequel
les deux tronçons de fil (23) s'étendent à l'intérieur d'un plan.

6. Cadenas en U selon l'une des revendications précédentes,
dans lequel
à au moins une extrémité (17) de l'étrier, l'un au moins des tronçons de fil (23) forme un étranglement (29) pour recevoir un élément de verrou d'un moyen de verrouillage du corps (11) du cadenas.

7. Cadenas en U selon l'une des revendications précédentes,
dans lequel
à au moins une extrémité (17) de l'étrier, les tronçons de fil (23) sont reliés à une partie de fixation (37) pour recevoir un élément de verrou d'un moyen de verrouillage du corps (11) du cadenas.

8. Cadenas en U selon l'une des revendications précédentes,
dans lequel
les deux tronçons de fil (23) forment une boucle de fil (28) sensiblement fermée.

9. Cadenas en U selon l'une des revendications précédentes,
dans lequel
l'étrier (13) comprend deux boucles de fil (28) sensiblement fermées qui s'étendent l'une à côté de l'autre le long de la forme en U de l'étrier.

10. Cadenas en U selon la revendication 9,
dans lequel
les deux boucles de fil (28) sont agencées parallèlement l'une à l'autre et à distance l'une de l'autre.

11. Cadenas en U selon l'une des revendications précédentes,
dans lequel
les tronçons de fil (23) sont durcis et/ou réalisés en acier à ressort, et/ou
les tronçons de fil (23) possèdent une résistance au pincement et au sciage supérieure à celle de l'enveloppe (35).

12. Cadenas en U selon l'une des revendications précédentes,
dans lequel
les tronçons de fil (23) sont sensiblement rigides, et/ou l'étrier (13) est réalisé sensiblement rigide.

13. Cadenas en U selon l'une des revendications précédentes,
dans lequel
l'enveloppe (35) présente un moulage en matière plastique ou un moulage en métal.

14. Cadenas en U selon l'une des revendications 1 à 12,
dans lequel
l'enveloppe (35) présente un boîtier en matière plastique ou en métal.

15. Cadenas en U selon l'une des revendications précédentes,
dans lequel
au moins un creux est formé entre les tronçons de fil (23) et l'enveloppe (35).
